# EUROPEAN PATENT SPECIFICATION

(11) **EP 1 652 740 B1**
(45) Date of publication and mention of the grant of the patent: **19.11.2008**
(21) Application number: 05020685.3
(22) Date of filing: 22.09.2005
(51) Int. Cl.: B60R 21/34

(54) **Outwardly deploying air bag system**
Externe Airbagvorrichtung
Système d'airbag extérieur

(30) Priority: 27.10.2004 JP 2004312621
(43) Date of publication of application: 03.05.2006
(73) Proprietor: TAKATA CORPORATION, Minato-ku, Tokyo 106-8510 (JP)
(72) Inventor: Takimoto, Takayuki, Minato-ku, Tokyo 106-8510 (JP)
(74) Representative: Vossius & Partner

(56) References cited:
- DE-A1- 10 062 560
- DE-A1- 10 102 597
- DE-A1- 10 239 352
- DE-U1- 20 119 580

## Description

The present invention relates to an outwardly deploying air bag system that protects a pedestrian, or a passenger of a bicycle or a motorcycle (hereinafter also referred to as a pedestrian or the like) when a vehicle collides with, for example, the pedestrian, the bicycle, or the motorcycle during driving.

Outwardly deploying air bag systems have been developed as pedestrian-protecting air bag systems that prevent a pedestrian or the like from directly hitting, for example, a wind shield by deploying an air bag along an outer surface of a vehicle body in order to protect the pedestrian or the like when a moving vehicle collides with, for example, the pedestrian, a bicycle, or a motorcycle.

DE 100 62 560 A1 relates to a vehicle pedestrian safety device. Support is provided by a restrainer wall which extends from the front bumper to vehicle roof and across the vehicle width. The restrainer is joined to a holder which transfers the wall from the place of rest to the support position and holds the wall there. The holder is preferably an inflatable airbag lance. At rest, the wall is folded together in the front part of the vehicle below the bumper. In the supporting position the wall foldout to form a banana curve convex to the vehicle. After a collision, the wall enters its support position with time delay.

DE 101 02 597 A1 which discloses the features of the preamble of claim 1, relates to a motor vehicle pedestrian safety device comprising a multiple chamber airbag having a bonnet chamber which is coupled by flow transfer to a windscreen chamber. In response to the activation of the safety device the air of a gas generator firstly inflates the bonnet chamber to lift up the bonnet or a front bonnet top so that a sufficient deformation way between the engine compartment and the bonnet is given. After complete inflation of the bonnet chamber and thereby reaching a predetermined internal gas pressure in chamber, the flow transfer to the windscreen chamber is released to blow this out over at least part of the screen.

When the internal pressure of an outwardly deploying air bag inflated along the outer surface of the vehicle body is excessively high or excessively low, an impact on the pedestrian or the like cannot be reduced sufficiently.

JP-A-8-276816 describes an outwardly deploying air bag system in which the internal pressure of an air bag increases as the speed of a car increases. This publication also discloses a mechanism that increases the inflation internal pressure of the air bag by reducing the internal capacity of the air bag, and discloses that the internal pressure of the air bag is decreased by inhibiting a part of gas from an inflator from being filled in the air bag.

It is known that vent holes are provided in an air bag of an outwardly deploying air bag system, as is described in, for example, JP-A-2001-315599.

The air bag described in JP-A-8-276816 does not have a vent hole, and the internal pressure of the inflated air bag is kept high for a relatively long period. In this type of air bag, gas does not leak from the vent hole when a pedestrian or the like hits the air bag, and therefore, a sufficient impact absorption property is not necessarily ensured.

When the air bag is provided with a vent hole, gas leaks from the air bag through the vent hole. Therefore, it is preferable to increase the output of the inflator in expectation of gas leakage. In this case, however, the maximum internal pressure of the inflated air bag vainly increases. Consequently, an impact on the pedestrian or the like cannot be sufficiently reduced, and, for example, the sewing cost and base-cloth cost of the air bag are increased.

An object of the present invention is to provide an outwardly deploying air bag system that can maintain the internal pressure of an air bag for a required period without vainly increasing the maximum internal pressure of the air bag during inflation.

An outwardly deploying air bag system according to the present invention (claim 1) includes an air bag deployable along an outer surface of an automobile, and a gas generating means for inflating the air bag. The gas generating means generates gas at a plurality of different times.

In an outwardly deploying air bag system claimed in claim 2, according to claim 1, the air bag has a vent means through which the gas leaks from the interior of the air bag to absorb an impact.

In an outwardly deploying air bag system claimed in claim 3, according to claim 2, the gas generating means performs a first gas generation step to inflate the air bag, and performs a second gas generation step when the internal pressure of the air bag falls to a predetermined pressure after reaching the maximum value.

In the outwardly deploying air bag system of the present invention, since the gas generating means generates gas at a plurality of different times, the internal pressure of the air bag can be kept high for a required period. It is also possible to limit the amount of gas generated by the gas generating means in one step, and to lower the maximum internal pressure of the inflated air bag. Consequently, an impact on the pedestrian or the like can be reduced sufficiently, and the production cost of the air bag can be reduced.

The present invention is suitably applied to a case in which there is a vent means through which gas leaks from the air bag. When the vent means, such as a vent hole, is provided, gas partly leaks from the air bag and the maximum internal pressure of the air bag is decreased, before a pedestrian or the like hits the air bag. According to the present invention, by performing the second and subsequent gas generation steps after the air bag is inflated, the gas leaking through the vent means is compensated for, and the internal pressure of the air bag can be kept high for a long period.

In the present invention, the air bag is inflated in the first gas generation step, and the second gas generation step is performed when the internal pressure of the air bag falls to a predetermined pressure after reaching the maximum value. Therefore, an impact on the pedestrian or the like can be absorbed quite sufficiently.

An embodiment of the present invention will be described below with reference to the drawings:
Figs. 1(a) and 1(b) are cross-sectional views of an outwardly deploying air bag system according to an embodiment of the invention showing a state before an air bag is inflated and a state after the air bag is inflated, respectively;
Fig. 2 is a graph showing the change of the internal pressure of an air bag with time in the outwardly deploying air bag system shown in Fig. 1; and
Fig. 3 is a cross-sectional view of an outwardly deploying air bag system according to another embodiment when an inflator operates.

An outwardly deploying air bag system 1 includes a container-shaped retainer (air-bag holding member) 2 serving as a case having an upper opening, an air bag 3 placed inside the retainer 2 in a folded manner, a protection cloth 4 that covers the folded air bag 3, an inflator 5 for inflating the air bag 3, and a lid (cover member) 6 that covers the upper opening of the retainer 2.

The inflator 5 is of a multistage type that injects gas in two steps, and two pairs of ignition harnesses 5a and 5b are connected thereto. The air bag 3 has vent holes 3a.

A tear line 6a formed of a groove is provided on a back surface of the lid 6. In a case in which the air bag 3 is inflated, when a pressing force stronger than a predetermined force is applied to the back surface of the lid 6 by the inflation pressure of the air bag 3, the lid 6 is torn along the tear line 6a, and starts to open outward.

The air bag 3 and the protection cloth 4 are attached to the retainer 2 by ring retainers 7, bolts 8, and nuts 9. The inflator 5 is also attached to the retainer 2 by the volts 8 and the nuts 9. A gas injecting portion at the head of the inflator 5 is placed inside the air bag 3. The lid 6 is attached to the retainer 2 by rivets 10.

In the outwardly deploying air bag system 1 having this configuration, when at least one of a collision predicting sensor and a collision detection sensor predicts or detects a collision with, for example, a pedestrian or the like, the inflator 5 is caused to inject gas in a first step, and the air bag 3 is inflated by the gas from the inflator 5.

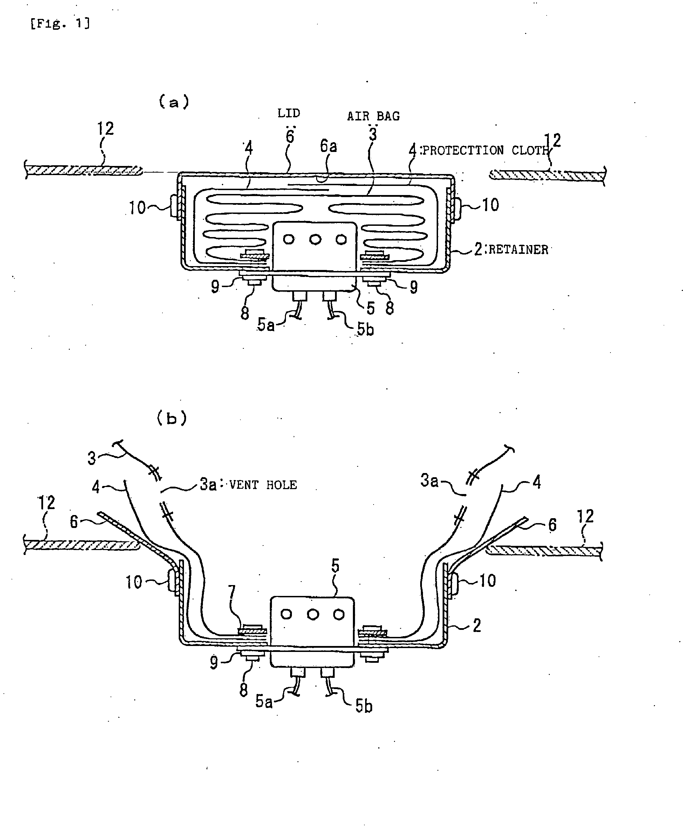

When the air bag 3 starts inflation, the lid 6 is torn along the tear line 6a by the inflation pressure of the air bag 3, and the air bag 3 is deployed along an outer surface 12 of a vehicle body, as shown in Fig. 1(b).

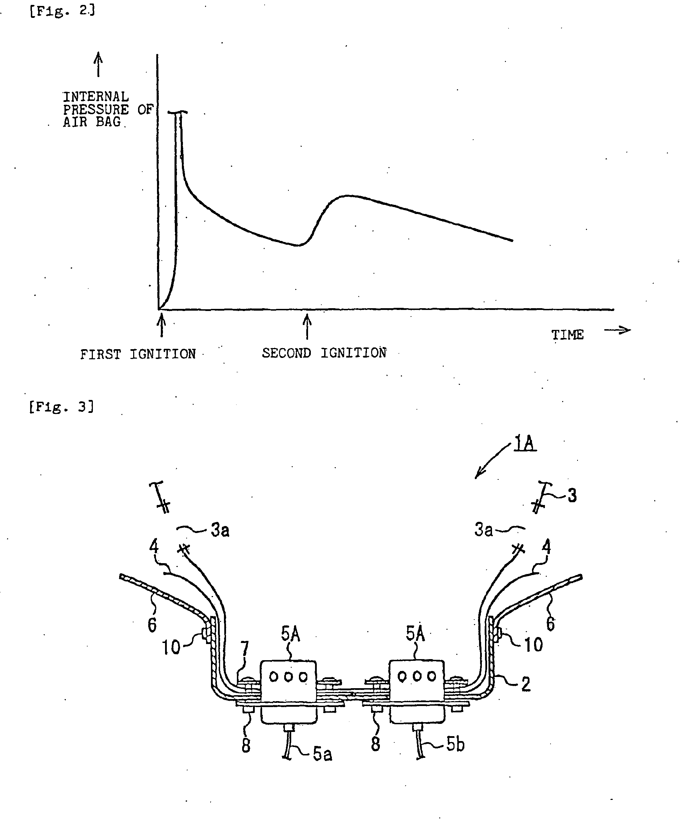

In this embodiment, the inflator 5 injects gas in two steps. When a collision with a pedestrian or the like is detected, the inflator 5 injects gas in the first step, as described above. Consequently, the air bag 3 is inflated and deployed into a final deployment shape. When the air bag 3 takes the final deployment shape, the internal pressure of the air bag 3 becomes the highest, as shown in Fig. 2. Subsequently, the internal pressure of the air bag 3 gradually decreases as the gas in the air bag 3 leaks through the vent holes 3a.

In this embodiment, the inflator 5 is caused to inject gas in the second step when the internal pressure of the air bag 3 falls to a predetermined pressure (for example, when approximately 70 msec to 120 msec passes from the beginning of the first gas injection step). The internal pressure of the air bag 3 is thereby increased again, as shown in Fig. 2. After the second gas injection step is completed, the internal pressure of the air bag 3 gradually decreases again.

By performing the second gas injection step, the internal pressure of the air bag 3 can be kept high for a long period, and an impact can be sufficiently absorbed at any time point when a pedestrian or the like hits the air bag 3.

In the outwardly deploying air bag system, the internal pressure of the air bag is kept high for a long period by the second gas injection step, and it is satisfactory as long as the pressure and amount of the gas injected in the first step can deploy the air bag 3 into the final deployment shape within a predetermined period. For this reason, in the outwardly deploying air bag system 1, the maximum internal pressure obtained when the air bag 3 is inflated into the final deployment shape is lower than before. Therefore, an impact on a pedestrian or the like can be sufficiently reduced, the strength of a base cloth of the air bag 3 and the required strength of a joint portion, such as a sewn portion, can be reduced, and the production cost of the air bag 3 can be reduced.

While the inflator 5 injects gas in two steps in this embodiment, it may inject gas in three or more steps.

In the present invention, instead of using the multistage inflator, a plurality of inflators 5A and 5B may be provided as in an outwardly deploying air bag system 1A shown in Fig. 3, and the internal pressure may be kept high for a long period by igniting the inflators 5A and 5B at different time points.

In the present invention, gas may leak through sewing stitches of the air bag 3, instead leaking through the vent holes of the air bag 3. Alternatively, gas may leak through a breathable base cloth that forms the air bag.

## Claims

1. An outwardly deploying air bag system comprising:
an air bag (3) deployable along an outer surface of an automobile; and
gas generating means (5,5A,5B) for inflating the air bag,
wherein the gas generating means generates gas at a plurality of different times, **characterised in that**
the gas generating means performs a first gas generation step to inflate the air bag, and performs a second gas generation step when the internal pressure of the air bag falls to a predetermined pressure after reaching the maximum value.

2. The outwardly deploying air bag system according to claim 1, wherein the air bag has vent means (3a) through which the gas leaks from the interior of the air bag to absorb an impact.

## Patentansprüche

1. Externe Airbagvorrichtung mit:
einem längs einer Außenfläche eines Fahrzeugs entfaltbaren Airbag (3) und
einem Gasgenerator (5, 5A, 5B) zum Aufblasen des Airbags,
wobei der Gasgenerator Gas zu mehreren verschiedenen Zeitpunkten erzeugt,
**dadurch gekennzeichnet, dass** der Gasgenerator einen ersten Gaserzeugungsschritt zum Aufblasen des Airbags ausführt und einen zweiten Gaserzeugungsschritt ausführt, wenn der Innendruck des Airbags nach dem Erreichen des Maximalwerts auf einen vorbestimmten Druck abfällt.

2. Externe Airbagvorrichtung nach Anspruch 1, wobei der Airbag Luftdurchlässe (3a) aufweist, durch die das Gas zum Dämpfen eines Aufpralls aus dem Inneren der Airbags entweicht.

## Revendications

1. Système de coussin de sécurité gonflable à déploiement vers l'extérieur comprenant :
◆ un coussin de sécurité gonflable (3), pouvant se déployer le long d'une surface extérieure d'une automobile ; et
◆ des moyens de génération de gaz (5, 5A, 5B) pour gonfler le coussin de sécurité gonflable,
dans lequel les moyens de génération de gaz génèrent un gaz à différents moments, **caractérisé en ce que** les moyens de génération de gaz effectuent une première phase de génération de gaz pour gonfler le coussin de sécurité gonflable, et effectuent une seconde phase de génération de gaz, quand la pression interne du coussin de sécurité gonflable tombe à une pression prédéterminée après avoir atteint la valeur maximale.

2. Système de coussin de sécurité gonflable à déploiement vers l'extérieur selon la revendication 1, dans lequel le coussin de sécurité gonflable dispose de systèmes d'évents (3a) à travers lesquels l'air s'échappe de l'intérieur du coussin de sécurité gonflable afin d'absorber un impact.
